# EUROPÄISCHE PATENTSCHRIFT

(11) **EP 0 858 624 B1**
(45) Veröffentlichungstag und Bekanntmachung des Hinweises auf die Patenterteilung: **29.12.1999**
(21) Anmeldenummer: 96934432.4
(22) Anmeldetag: 17.10.1996
(51) Int. Cl.: G05B 19/042

(54) **DEZENTRAL ANORDENBARES PERIPHERIEBAUGRUPPENSYSTEM**
SYSTEM OF PERIPHERAL ASSEMBLIES WHICH MAY BE ARRANGED IN A DECENTRALISED MANNER
SYSTEME D'ENSEMBLES PERIPHERIQUES POUVANT ETRE DISPOSES DE FACON DECENTRALISEE

(30) Priorität: 30.10.1995 DE 19540838
(43) Veröffentlichungstag der Anmeldung: 19.08.1998
(73) Patentinhaber: SIEMENS AKTIENGESELLSCHAFT, 80333 München (DE)
(72) Erfinder: SCHOTT, Thomas, D-91353 Hausen (DE); OBLASSER, Siegfried, D-90518 Altdorf (DE); HELMRICH, Klaus, D-91575 Windsbach (DE)
(86) Internationale Anmeldenummer: DE9601981
(87) Internationale Veröffentlichungsnummer: WO9716775

(56) Entgegenhaltungen:
- EP-A- 0 359 566
- EP-A- 0 586 715
- WO-A-94/27196
- DE-A- 4 334 980

## Beschreibung

Die vorliegende Erfindung betrifft eine dezentral anordenbares Baugruppensystem, bestehend aus einer Grundbaugruppe und mindestens einem Erweiterungsmodul.

Aus der DE-35 37 399 ist eine dezentral anordenbare periphere Interface Einheit bekannt, die mittels weiterer peripherer Interface Einheiten modular erweiterbar ist. Die periphere Interface Einheit beinhaltet eine intelligente Einheit, welche über ein erstes Kommunikationsmittel mit einem übergeordneten Rechner und über ein zweites Kommunikationsmittel mit einem Erweiterungsgerät, einer nachgeschalteten peripheren Interface Einheit, und über weitere Kommunikationsmittel mit der technischen Anlage kommuniziert. Die jeweiligen peripheren Interface Einheiten weisen Mittel zur Peripherieansteuerung auf.

Aus der WO 94/27196 ist eine dezentrale Peripheriebaugruppe bekannt, welche aus einer Anschlußeinrichtung besteht, in welche Umsetzmodule einsetzbar sind. Die Verbindung zu einer übergeordneten Steuerung erfolgt durch eine Busanschaltung.

Der aus dieser Schrift bekannte Aufbau ist insofern noch nicht optimal, als auch im Minimalausbau der dezentralen Peripheriebaugruppe eine Vielzahl von einzelnen Komponenten benötigt wird.

Ferner sind Peripheriebaugruppen bekannt, bei welchen Umsetzeinheiten und Busanschluß in die Anschlußeinrichtung integriert sind. Diese Baugruppen sind jedoch nicht erweiterbar, was zugleich den Nachteil dieser Baugruppen darstellt.

Die Aufgabe der vorliegenden Erfindung besteht folglich darin, ein dezentral anordenbares Peripheriebaugruppensystem zur Verfügung zu stellen, bei dem einerseits ein kostengünstiges Grundsystem möglich ist, welches später flexibel erweiterbar ist.

Die Aufgabe wird durch die Merkmale des Anspruchs 1 gelöst, wobei sich das erfindungsgemäße dezentral anordenbare Peripheriebaugruppensystem einerseits durch die Tatsache auszeichnet, daß die Peripherieansteuereinheiten des Erweiterungsmoduls unabhängig von den Peripherieanschlüssen des Erweiterungsmoduls vom Peripheriebaugruppensystem entfernbar sind, so daß ein Austausch der Peripherieansteuereinheiten erfolgen kann, ohne die Peripherieanschlüsse lösen und später wieder befestigen zu müssen. Man erzielt so also eine sogenannte stehende Verdrahtung. Desweiteren zeichnet sich das erfindungsgemäße Peripheriebaugruppensystem dadurch aus, daß in ihm sehr einfach aufgebaute Peripherieansteuereinheiten plazierbar sind, welche ohne Änderungen in beliebige Steckplätze des Erweiterungsmoduls einsteckbar sind, ohne daß dafür Änderungen im Erweiterungsmodul oder an den Peripherieansteuereinheiten erforderlich sind.

Durch die Maßnahmen der Ansprüche 3 und 4 wird eine besonders störsichere Übertragung von Analogsignalen erzielt.

Die Maßnahmen gemäß den Ansprüchen 5 und 6 haben sich in Untersuchungen als besonders geeignete Größen erwiesen.

Weitere Vorteile und Einzelheiten ergeben sich aus der nachfolgenden Beschreibung eines Ausführungsbeispiels. Dabei zeigen:
- FIG 1: ein Blockschaltbild der Grundbaugruppe,
- FIG 2: ein Blockschaltbild des Erweiterungsmoduls und
- FIG 3: ein Blockschaltbild einer Peripherieansteuereinheit eines Erweiterungsmoduls.

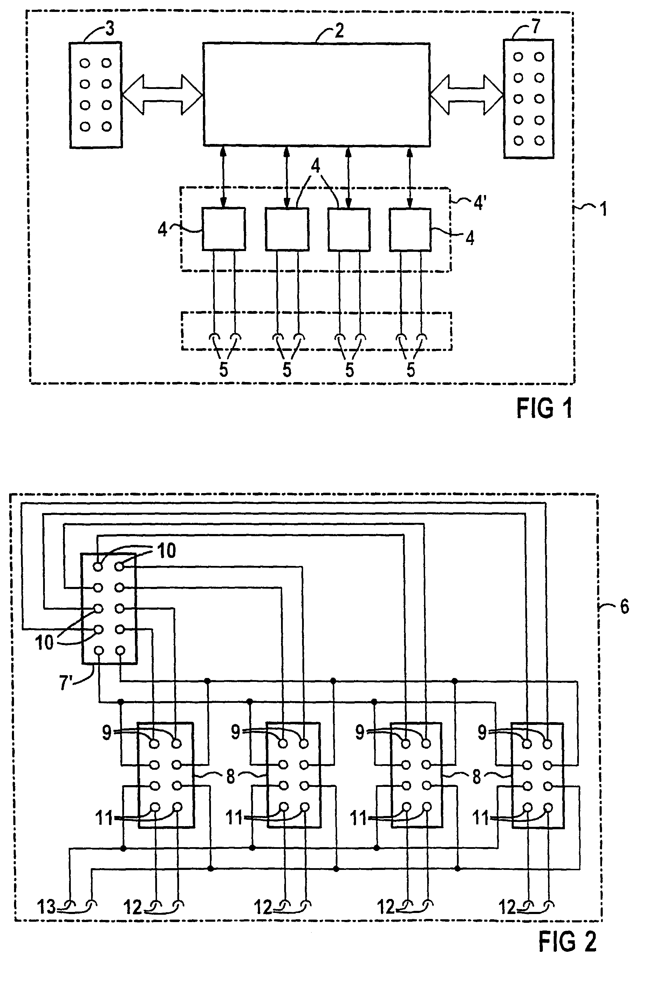

Gemäß FIG 1 weist die Grundbaugruppe 1 eine intelligenten Einheit 2, z.B. einen Mikrocontroller 2, auf. Die intelligente Einheit 2 ist zur Kommunikation mit einer übergeordneten Steuerung mit einem Feldbusanschluß 3 verbunden. Über den Feldbusanschluß 3 kann die intelligente Einheit beispielsweise gemäß dem PROFIBUS-Protokoll mit einer übergeordneten speicherprogrammierbaren Steuerung kommunizieren. Dadurch ist die intelligente Einheit 2 in der Lage, von der speicherprogrammierbaren Steuerung Daten zu empfangen bzw. umgekehrt Daten an sie zu senden.

Die intelligente Einheit 2 ist ferner mit den Peripherieansteuereinheiten 4 verbunden. Mit den Peripherieansteuereinheiten 4 wiederum sind Peripherieanschlüsse 5 verbunden, so daß die intelligente Einheit 2 im Ergebnis Signale von einer zu kontrollierenden technischen Anlage empfangen bzw. Signale an sie ausgeben kann. Die intelligente Einheit 2 kann also über die Peripherieansteuereinheiten 4 und die Peripherieanschlüsse 5 auch mit der technischen Anlage kommunizieren.

Aus Übersichtlichkeitsgründen sind die Peripherieansteuereinheiten 4 in FIG 1 als zweikanalige Peripherieansteuereinheitengruppen ausgebildet. Tatsächlich sind die Peripherieansteuereinheitengruppen dagegen in der Lage, vier oder acht Kanäle zu bedienen. Im Ergebnis ergibt sich damit eine Anzahl von 16 bzw. 32 Peripherieanschlüssen für die Grundbaugruppe.

Anstelle der Aufteilung der Peripherieansteuereinheiten 4 in vier Gruppen könnten diese auch zu einer einzigen Peripherieansteuereinheit 4' zusammengefaßt sein. Unter dem Begriff ,,Anzahl von Peripherieansteuereinheiten" ist jedoch stets die Summe aller Kanäle zu verstehen.

Die Grundbaugruppe 1 ist, wenn sie über den Feldbusanschluß 3 mit einer übergeordneten speicherprogrammierbaren Steuerung verbunden ist, allein betriebsfähig. Wenn aber die Peripherieansteuereinheiten 4 und die Peripherieanschlüsse 5 nicht ausreichen, um die zu kontrollierende technische Anlage zu kontrollieren, ist es erforderlich, das Erweiterungsgerät 6 über die 1:1 einander entsprechenden Erweiterungsanschlüsse 7,7' miteinander zu verbinden. Die Verbindung kann z.B. mittels eines vorkonfektionierten Flachbandkabels erfolgen.

Das Erweiterungsgerät 6 weist - siehe FIG 2 - mehrere Steckplätze 8 auf. Bei jedem Steckplatz 8 sind die beiden obersten Kontakte 9 mit zwei Kontakten 10 des Erweiterungsanschlusses 7' verbunden. Über diese Kontakte werden die Nutzsignale übertragen. Ferner sind die beiden untersten Kontakte 11 der Steckplätze 8 mit den Peripherieanschlußeinheiten 12 verbunden. Die anderen vier Kontakte jedes Steckplatzes 8 sind entweder über den Erweiterungsanschluß 7' intern mit Masse bzw. +5 Volt verbunden oder extern über die Klemmen 13 mit 0 und +24 Volt verbindbar.

Wie aus FIG 2 ersichtlich ist, sind damit die Peripherieanschlüsse 12 mehrerer Erweiterungsmodule auf dem Erweiterungsgerät 6 angeordnet.

Die Steckplätze 8 sind, wie aus FIG 2 sofort ersichtlich ist, also zweikanalig ausgebildet. Sie könnten aber auch einkanalig ausgebildet sein. Ferner sind in FIG 2 nur vier Steckplätze 8 dargestellt. Tatsächlich weist das Erweiterungsgerät 6 hingegen acht Steckplätze auf.

In die Steckplätze 8 werden die Peripherieansteuereinheiten der Erweiterungsmodule 14 eingesteckt. Es ist aus FIG 2 sofort ersichtlich, daß die Peripherieansteuereinheiten in jeden der Steckplätze 8 eingesteckt werden können, da die Anordnung der Steckkontakte 9,11 bei allen Steckplätzen 8 identisch ist. Ferner ist sofort ersichtlich, daß die Peripherieansteuereinheiten, welche in das Erweiterungsgerät 6 eingesteckt werden, unabhängig von den Peripherieanschlüssen 12 aus den Peripheriebaugruppensystem entfernt werden können.

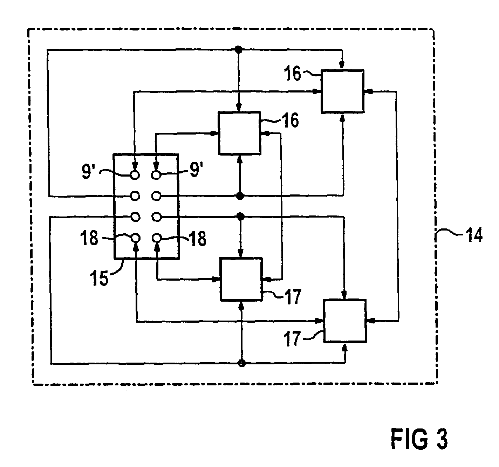

FIG 3 zeigt nun beispielhaft für andere Peripherieansteuereinheiten ein Analogein- bzw. -ausgabemodul 14. Gemäß FIG 3 weist das Modul 14 einen Stecker 15 auf, mit dem es in einen der Steckplätze 8 eingesteckt werden kann. Die beiden Signalkontakte 9' sind mit den Umsetzeinheiten 16 verbunden, welche wiederum mit Pegelwandlern 17 verbunden sind. Die Pegelwandler 17 sind mit den beiden Ein-/Ausgabekontakten 18 verbunden.

Die intelligente Einheit 2 der Grundbaugruppe 1 ist derart ausgebildet, daß sie in der Lage ist, über einen beliebigen der Erweiterungskontakte 10 - mit Ausnahme der beiden Versorgungskontakte - ein serielles Bitmuster zu senden. Sie realisiert hierzu eine Umsetzeinheit, welche ein Analogsignal, welches an die zu kontrollierende technische Anlage übertragen werden soll, in ein Bitmuster umwandelt. Dieses Bitmuster wird dann seriell über die entsprechende Leitung zum Modul 14 und von dort weiter zu einer der Umsetzeinheiten 16 übertragen. Die Umsetzeinheit 16 ermittelt anhand des empfangenden seriellen Bitmusters das korrespondierende Analog-Ausgabesignal und übermittelt es an den mit ihr verbundenen Pegelwandler 17. Dieser gibt dann das Signal über den zugeordneten Ein-/Ausgabekontakt 18 an die zu kontrollierende technische Anlage aus.

Wenn umgekehrt das Modul 14 ein Analog-Eingabemodul ist, erfolgt zunächst eine Pegelwandlung des über den Ein-/Ausgabekontakt 18 empfangenen Signals im Pegelwandler 17. Das gewandelte Signal wird dann von der Umsetzeinheit 16 in ein Bitmuster umgesetzt, welche wiederum seriell über einen der Signalkontakte 9' zur intelligenten Einheit 2 der Grundbaugruppe übertragen wird. Diese rekonstruiert dann aus dem empfangenen seriellen Bitmuster das korrespondierende Analogsignal.

Insbesondere das Verfahren zur Analogsignalübertragung ist durch die Digitalisierung der übertragenen Signale sehr störungssicher.

## Patentansprüche

1. Dezentral anordenbares Peripheriebaugruppensystem, bestehend aus einer Grundbaugruppe (1) und mindestens einem Erweiterungsgerät (6),
- wobei die Grundbaugruppe (1) eine intelligente Einheit (2) aufweist, die
-- zur Kommunikation mit einer übergeordneten Steuerung mit einem Busanschluß (3), insbesondere einem Feldbusanschluß (3),
-- zur Kommunikation mit einer zu kontrollierenden technischen Anlage mit einer Anzahl von Peripherieansteuereinheiten (4) nebst zugehörigen Peripherieanschlüssen (5) und
-- zwecks Erweiterbarkeit der Grundbaugruppe (1) über einen Erweiterungsanschluß (7,7') mit dem mindestens einen Erweiterungsmodul (6)
verbunden ist,
- wobei das Erweiterungsgerät (6) ebenfalls eine Anzahl von Peripherieansteuereinheiten (14) nebst zugehörigen Peripherieanschlüssen (12) aufweist und
- wobei die Anzahl von Peripherieansteuereinheiten (14) des Erweiterungsgerätes (6) erheblich geringer ist als die Anzahl von Peripherieansteuereinheiten (4) der Grundbaugruppe (1),
**dadurch gekennzeichnet**,
- daß die Peripherieansteuereinheiten (14) des Erweiterungsgerätes (6) unabhängig von den Peripherieanschlüssen (12) des Erweiterungsgerätes (6) vom Peripheriebaugruppensystem entfernbar sind,
- daß der Erweiterungsanschluß (7, 7') für jedes zwischen Grundbaugruppe (1) und Erweiterungsgerätes (6) zu übertragende Nutzsignal einen eigenen Erweiterungskontakt (10) aufweist,
- daß die Steckplätze (8) für jedes zwischen Grundbaugruppe (1) und das in den jeweiligen Steckplatz (8) einzustekkenden Peripherieansteuereinheit (14) zu übertragende Nutzsignal einen eigenen Steckkontakt (9) aufweisen,
- daß jeder für die Übertragung von Nutzsignalen vorgesehene Steckkontakt (9) mit dem ihm zugeordneten, für die Übertragung von Nutzsignalen vorgesehenen Erweiterungskontakt (10) verbunden ist, und
- daß die für die Übertragung von Nutzsignalen vorgesehenen Steckkontakte (9) bei allen Steckplätzen (8) an den gleichen Stellen angeordnet sind.

2. Peripheriebaugruppensystem nach Anspruch 1,
**dadurch gekennzeichnet**, daß die Anzahl von Steckplätzen (8) des Erweiterungsgeräts (6) zwischen 5 und 10, z.B. bei 8, liegt.

3. Peripheriebaugruppensystem nach Anspruch 1 oder 2,
**dadurch gekennzeichnet,**
- daß mindestens eine der Peripherieansteuereinheiten (14) des Erweiterungsgerätes (6) als Analogeingabemodul (14) ausgebildet ist,
- daß das Analogeingabemodul (14) eine Umsetzeinheit (16) zum Umsetzen eines von der zu kontrollierenden technischen Anlage empfangenen Analogsignals in ein über den Erweiterungsanschluß (7,7') an die Grundbaugruppe (1) zu übertragendes serielles Bitmuster aufweist und
- daß die auf der Grundbaugruppe (1) angeordnete intelligente Einheit (2) derart ausgebildet ist, daß sie in der Lage ist, anhand des empfangenen seriellen Bitmusters das hierzu korrespondierende Analogsignal zu ermitteln.

4. Peripheriebaugruppensystem nach Anspruch 1, 2 oder 3,
**dadurch gekennzeichnet**,
- daß mindestens eine der Peripherieansteuereinheiten (14) des Erweiterungsgerätes (6) als Analogausgabemodul (14) ausgebildet ist,
- daß die auf der Grundbaugruppe (1) angeordnete intelligente Einheit (2) eine Umsetzeinheit (2) zum Umsetzen eines an die zu kontrollierende technische Anlage zu übertragenden Analogsignals in ein über den Erweiterungsanschluß (7,7') an das Analogausgabemodul (14) zu übertragendes serielles Bitmuster aufweist und
- daß das Analogausgabemodul (14) derart ausgebildet ist, daß es in der Lage ist, anhand des empfangenen seriellen Bitmusters das hierzu korrespondierende Analogsignal zu ermitteln.

5. Peripheriebaugruppensystem nach einem der obigen Ansprüche, **dadurch gekennzeichnet**, daß die Anzahl von Peripherieansteuereinheiten (4) nebst zugehörigen Peripherieanschlüssen (5) der Grundbaugruppe (1) 16 oder 32 ist.

6. Peripheriebaugruppensystem nach einem der obigen Ansprüche, **dadurch gekennzeichnet**, daß die Anzahl von Peripherieansteuereinheiten (14) nebst zugehörigen Peripherieanschlüssen (12) eines Erweiterungsgerätes (6) 1 oder 2 ist.

## Claims

1. Peripheral assembly system which can be arranged in a decentralized manner and comprises a basic assembly (1) and at least one expansion unit (6),
- the basic assembly (1) having an intelligent unit (2) which is connected
-- to a bus connection (3), in particular a field bus connection (3), for the purpose of communication with a superordinate controller,
-- to a number of peripheral drive units (4) together with associated peripheral connections (5) for the purpose of communication with a technical installation to be supervised, and
-- to the at least one expansion unit (6) via an expansion connection (7, 7') for the purpose of expansibility of the basic assembly (1),
- the expansion unit (6) likewise having a number of peripheral drive units (14) together with associated peripheral connections (12), and
- the number of peripheral drive units (14) of the expansion unit (6) being considerably less than the number of peripheral drive units (4) of the basic assembly (1),
- characterized in that
- the peripheral drive units (14) of the expansion unit (6) can be removed from the peripheral assembly system independently of the peripheral connections (12) of the expansion unit (6),
- in that the expansion connection (7, 7') has a dedicated expansion contact (10) for each useful signal to be transmitted between the basic assembly (1) and the expansion unit (6),
- in that the insertion locations (8) have a dedicated plug contact (9) for each useful signal to be transmitted between the basic assembly (1) and the peripheral drive unit (14) to be inserted into the respective insertion location (8),
- in that each plug contact (9) provided for the transmission of useful signals is connected to an expansion contact (10) which is assigned to it and is provided for the transmission of useful signals, and
- in that the plug contacts (9) provided for the transmission of useful signals are arranged at the same points in all of the insertion locations (8).

2. Peripheral assembly system according to Claim 1, characterized in that the number of insertion locations (8) of the expansion unit (6) is between 5 and 10, for example 8.

3. Peripheral assembly system according to Claim 1 or 2, characterized
- in that at least one of the peripheral drive units (14) of the expansion unit (6) is designed as an analog input module (14),
- in that the analog input module (14) has a conversion unit (16) for converting an analog signal received from the technical installation to be supervised into a serial bit pattern to be transmitted to the basic assembly (1) via the expansion connection (7, 7'), and
- in that the intelligent unit (2) arranged on the basic assembly (1) is designed in such a way that it can use the received serial bit pattern to determine the analog signal corresponding thereto.

4. Peripheral assembly system according to Claim 1, 2 or 3, characterized
- in that at least one of the peripheral drive units (14) of the expansion unit (6) is designed as an analog output module (14),
- in that the intelligent unit (2) arranged on the basic assembly (1) has a conversion unit (2) for converting an analog signal to be transmitted to the technical installation to be supervised into a serial bit pattern to be transmitted to the analog output module (14) via the expansion connection (7, 7'), and
- in that the analog output module (14) is designed in such a way that it can use the received serial bit pattern to determine the analog signal corresponding thereto.

5. Peripheral assembly system according to one of the preceding claims, characterized in that the number of peripheral drive units (4) together with associated peripheral connections (5) of the basic assembly (1) is 16 or 32.

6. Peripheral assembly system according to one of the preceding claims, characterized in that the number of peripheral drive units (14) together with associated peripheral connections (12) of an expansion unit (6) is 1 or 2.

## Revendications

1. Système de modules périphériques pouvant être disposé de façon décentralisée et constitué d'un module de base (1) et d'au moins un module d'extension (6),
- dans lequel le module de base (1) comporte une unité intelligente (2) qui est reliée
-- pour la communication avec une commande de rang hiérarchique supérieur, à un raccordement de bus (3), notamment un raccordement de bus de terrain (3),
-- pour la communication avec une installation technique à contrôler, à un certain nombre d'unités de commande périphérique (4) avec des raccordements périphériques (5) associés, et
-- pour permettre l'extension du module de base (1), par l'intermédiaire d'un raccordement d'extension (7, 7'), au moins à un module d'extension (6),
- dans lequel le module d'extension (6) comporte également un certain nombre d'unités de commande périphérique (14) avec des raccordements périphériques (12) associés, et
- dans lequel le nombre d'unités de commande périphérique (14) du module d'extension (6) est nettement inférieur au nombre d'unités de commande périphérique (4) du module de base (1),
caractérisé par le fait que
- les unités de commande périphérique (14) du module d'extension (6) peuvent être enlevées du système de modules périphériques indépendamment des raccordements périphériques (12) du module d'extension (6),
- le raccordement d'extension (7, 7') comporte un contact d'extension (10) particulier pour chaque signal utile à transmettre entre le module de base (1) et le module d'extension (6),
- les emplacements d'enfichage (8) comportent un contact à fiches (9) particulier pour chaque signal utile à transmettre entre le module de base (1) et l'unité de commande périphérique (14) à enficher dans l'emplacement d'enfichage (8) respectif,
- chaque contact à fiches (9) prévu pour la transmission de signaux utiles est relié au contact d'extension (10) qui lui est associé et qui est prévu pour la transmission de signaux utiles, et que
- les contacts à fiches (9) prévus pour la transmission de signaux utiles sont disposés aux mêmes endroits pour tous les emplacements d'enfichage (8).

2. Système de modules périphériques selon la revendication 1, caractérisé par le fait que le nombre d'emplacements d'enfichage (8) du module d'extension (6) est compris entre 5 et 10, par exemple 8.

3. Système de modules périphériques selon la revendication 1 ou 2, caractérisé par le fait que
- au moins l'une des unités de commande périphérique (14) du module d'extension (6) est conçue comme un module d'entrée analogique (14),
- le module d'entrée analogique (14) comporte une unité de conversion (16) pour convertir un signal analogique reçu de l'installation technique à contrôler en une configuration binaire sérielle à transmettre par l'intermédiaire du raccordement d'extension (7, 7') au module de base (1), et que
- l'unité intelligente (2) montée sur le module de base (1) est conçue de telle sorte qu'elle est capable de déterminer à l'aide de la configuration binaire sérielle reçue le signal analogique correspondant.

4. Système de modules périphériques selon la revendication 1, 2 ou 3, caractérisé par le fait que
- au moins l'une des unités de commande périphérique (14) du module d'extension (6) est conçue comme un module de sortie analogique (14),
- l'unité intelligente (2) montée sur le module de base (1) comporte une unité de conversion (16) pour convertir un signal analogique à transmettre à l'installation technique à contrôler en une configuration binaire sérielle à transmettre par l'intermédiaire du raccordement d'extension (7, 7') au module de sortie analogique (14), et que
- le module de sortie analogique (14) est conçu de telle sorte qu'il est capable de déterminer à l'aide de la configuration binaire sérielle reçue le signal analogique correspondant.

5. Système de modules périphériques selon l'une des revendications précédentes, caractérisé par le fait que le nombre d'unités de commande périphérique (4) avec des raccordements périphériques (5) associés du module de base (1) est égal à 16 ou 32.

6. Système de modules périphériques selon l'une des revendications précédentes, caractérisé par le fait que le nombre d'unités de commande périphérique (14) avec des raccordements périphériques (12) associés d'un module d'extension (6) est égal à 1 ou 2.
